# EUROPÄISCHE PATENTSCHRIFT

(11) **EP 0 796 596 B1**
(45) Veröffentlichungstag und Bekanntmachung des Hinweises auf die Patenterteilung: **11.09.2002**
(21) Anmeldenummer: 97104325.2
(22) Anmeldetag: 13.03.1997
(51) Int. Cl.: A61C 19/10

(54) **System zur Form- und Farbstrukturbestimmung von Zähnen**
System for determining form and colour of teeth
Système pour déterminer la forme et la couleur des dents

(30) Priorität: 21.03.1996 DE 19611122
(43) Veröffentlichungstag der Anmeldung: 24.09.1997
(73) Patentinhaber: Pfau, Gerhard, 88239 Wangen (DE)
(72) Erfinder: Pfau, Gerhard, 88239 Wangen (DE)
(74) Vertreter: Riebling, Peter, Dr.-Ing.

(56) Entgegenhaltungen:
- WO-A-96/06578
- US-A- 5 308 243
- US-A- 5 482 459

## Beschreibung

Die Erfindung befaßt sich mit einem System zur Form- und Farbstrukturbestimmung von Zähnen, insbesondere zur Anwendung bei Vorbereitung und der Herstellung von Zahnersatz.

Die bisherige Methode zur Farbstrukturbestimmung stützt sich auf Farbskalen, mit z.B. 20 Farbmustern, welche die gängigsten natürlichen Zahnfarben enthalten. Solche Methode sind z.B. aus den WO-A-96 06578 und US-A-5 482 459 bekannt. Der Zahnarzt oder Zahntechniker bestimmt durch Vergleich der Farbskalen mit der Zahnfarbe des Patienten die zum Patienten passende Zahnfarbe, so daß darauf die Reproduktion des Zahnes mit keramischen Massen oder Kunststoffverblendmassen aus einem Grundsortiment des jeweiligen Herstellers erfolgen kann. Die Umsetzung des Farbeindrucks in dem zu erstellenden Zahnersatz erfolgt durch eine einfache Schichttechnik beim Auftragen der Verblendmassen, wobei in der Regel fünf Massen aus dem Grundsortiment angewendet werden, die gewöhnlich in dieser Reihenfolge auf den Grundkörper des Zahnersatzes aufgetragen werden: Opaquer, Opaquedentin, Dentin, Schneidemasse und Transpamasse.

Mit diesen Massen kann der natürliche Zahn nur in seiner Grundfarbe reproduziert werden, wobei die natürlich vorkommenden Farbmerkmale, wie z.B. helle/dunkle Einschlüsse, z. B. Sekundärdentin, Kalkflecken, Mammelons oder ein andersfarbiger incisaler Saum nur durch Anwendung sogenannter Effektmassen erzielt werden können. Um das natürliche Zahnbild zu reproduzieren, muß sich der Zahntechniker individuelle Skizzen anfertigen, in denen er den entsprechenden Farbmerkmalen des Zahn des Patienten die anzuwendenden Effektmassen und die Schichttechniken nach eigener Erfahrung zuordnet und notiert.

Problematisch hierbei ist die exakte Farbnahme beim Patienten und die Anwendung der Effektmassen, bei der nur durch viel Erfahrung und Ausprobieren die sich beim fertiggestellten Zahnersatz einstellende Farbwirkung abgeschätzt werden kann.

Um die Farbbestimmung und die spezielle Effektmassen-Schichtungstechnik zu erlernen ist ein hoher Kosten- und Zeitaufwand notwendig.

Auch die Reproduktion der natürlichen Zahnform wirft Probleme auf und zwar insbesondere dann, wenn der Patient bereits Zahnersatz trägt, d.h. die ursprüngliche natürliche Zahnform nicht bekannt ist. Der Zahntechniker hat so gut wie keinen Anhaltspunkt für die Formgebung des Zahnersatzes.

Aufgabe der Erfindung ist es, eine einfache und sichere Bestimmung der Zahnform und des Farbaufbaus zu ermöglichen und die ermittelte Form und Farbcharakteristik möglichst naturgetreu reproduzierbar zu machen.

Gelöst wird diese Aufgabe durch die technische Lehre des Patentanspruchs 1.

Es sind verschiedenen Sortimenten vorgesehen, die Modelle und Bilddarstellungen sowie Schichtungsschemata verschiedener Zahnformen und Zahnfarbstrukturen beinhalten. Am Patienten erfolgt ein Vergleich der Form und des Farbaufbaus der Patientenzähne mit den Modellen wobei das/die passende(n) Sortiment(e) in einfacher Weise ausgewählt und im Zahnlabor naturgetreu reproduziert werden können.

Das erfindungsgemäße System besteht aus verschiedenen Komponenten die zu Grundsortimenten zusammengestellt werden können: Die wichtigsten Komponenten sind:
- Situationsmodell(e) des Ober- und/oder Unterkiefers eines Probanten
- Farbbilddarstellungen der Mundsituation eines Probanten
- den Farbbilddarstellungen zugeordnete Schichtungsschemata zur schrittweisen Darstellung der notwendigen Schichtungsfolge für die Reproduktion des Zahnersatzes.

Folgende Grundsortimente werden zusammengestellt:
1. Basissortiment, Frontzähne (für Labor)
2. Mastersortiment(e), Frontzähne (für Labor)
3. Seitenzahnsortiment(e) (für Labor)
4. Bilddarstellung der Schichtungsweise und Schichtungstechnik (für Labor)
5. Zahnarztsortiment
6. Computerprogramm (optional)

### 1. Basissortiment:

Das Basissortiment besteht aus mehreren Sets und einer diesen zugeordneten Sammlung von Bilddarstellungen (Photographien, Diapositive).
Die verschiedenen Sets enthalten jeweils Situationsmodelle der natürlichen Bezahnung eines Probanten, speziell Frontzähne (Oberkiefer, Unterkiefer), Photographien (Diapositive) und ein Schichtungsschema des jeweiligen Patientenbeispiels. Statt der Situationsmodelle können auch Zahnmodelle aus geschichtetem keramischem oder Kunststoffverblendmaterial verwendet werden. Wahlweise können die Modelle mit metallischen Oberflächen versehen werden.

Ein oder mehrere Sets des Basissortiments können auch anstelle der Situationsmodelle der natürlichen Bezahnung eines Probanten Situationsmodelle enthalten, welche eine erfolgte Restauration einzelner Zähne zeigen, wobei die Restauration nach dem erfindungsgemäß vorgeschlagenen Verfahren durchgeführt wurde. Dabei enthalten die Sets dann ergänzend die Bilddarstellungen und Schichtungsschemata, die zu den restaurierten Zähnen der Situationsmodelle passen.

Die Situationsmodelle entsprechen der genauen Zahnsituation im Mund des Probanten. Die Bilddarstellungen porträtieren die Mundsituation in Großaufnahme, und werden über direkte Farbfotografie und Spiegelaufnahmen genommen, und sind farblich eine genaue Wiedergabe der Zahnsituation des jeweiligen Probanten, die den individuellen Charakter der Zähne widerspiegelt. Um die Reproduktion mit einem Keramiksystem oder Kunststoffverblendsystem zu ermöglichen, wird z.B. auf übereinander positionierbaren Klarsichtbögen oder auch ausführlicher Beschreibung in Buch- oder Heftform mit Text- und Farbbildmaterial das jeweilige Schichtungsschema für den Probanten erstellt, aus dem die methodische Arbeitsweise erkennbar ist, welche Verblend- und Effektmassen in welchen Bereichen in welcher Tiefe verwendet werden müssen, um die natürliche Farbwirkung zu reproduzieren. Das Ergebnis einer Reproduktion, die nach vorliegendem Verfahren erstellt wurde, kann photographisch dokumentiert beiliegen.

Dazu werden außerdem Blankoschichtungschemata geliefert, um ein Notieren farblicher Unterschiede bei Patientenfällen gleichen Schemas zu ermöglichen. Das Basissortiment ist aus Probantenbeispielen zusammengestellt, die die am häufigsten anzutreffenden Charakteristika der Zahnformen und Zahnfarben beinhalten. Das Sortiment ist für die Arbeit im Labor konzipiert und eine immer verfügbare Vorlage für den Zahntechniker im Umgang mit Farb- und Formbestimmung von Zähnen und deren naturgetreuer Reproduktion mit dem jeweiligen Keramik- bzw. Kunststoffverblendsystem.

### 2. Mastersortiment(e):

Das Mastersortiment ist gleich aufgebaut wie das Basissortiment und findet die gleiche Anwendung. Der Unterschied zum Basissortiment liegt in der Auswahl der Probantenbeispiele. Das Mastersortiment enthält außergewöhnliche Form- Farb- und Stellungsbeispiele, wie z.B. starke Sekundärdentinbildung, mögliche Verfärbungen durch Medikamente oder sonstige außergewöhnliche, natürlich vorkommende Farbstrukturen.

### 3. Seitenzahnsortiment(e):

Der Aufbau des Seitenzahnsortiments entspricht dem des Basis- oder Mastersortiments mit dem Unterschied, daß alle in den oben genannten Sortimenten berücksichtigten Parameter sich auf die Anwendung bei Seitenzähnen beziehen.
Eine Sammlung von natürlichen Einzelzähnen gewonnenen Gips- oder Kunststoffduplikaten liegt dem Sortiment zum Studium und Vergleich natürlicher Kauflächen- und Kronenreliefs bei. Zur Gewinnung von Fertigkauflächen liegen hiervon Silikonformen bei.

### 4. Bilddarstellungen (Fotografien, Diapositive) der keramischen Schichtweise.

Bezogen auf das Basis-, Master- und Seitenzahnsortiment wird hier der Aufbau der keramischen Massen zu jedem Set Schritt für Schritt auf Bildträgern dokumentiert. Die keramischen Massen oder Kunststoffverblendmassen sind unterschiedlich eingefärbt, und zusammen mit dem Schichtungsschema kann der Zahntechniker das Vorgehen für die Reproduktion der Farbsituation beim jeweiligen Probantenbeispiel Schritt für Schritt nachvollziehen.

### 5. Zahnarztsortiment(e):

Das Zahnarztsortiment hat den gleichen Aufbau und Inhalt wie das Basis-, Master- und Seitenzahnsortiment. Es ermöglicht dem Zahnarzt direkt am Patienten dessen Zahnform- , Zahnfarbe und -Stellung zu bestimmen. Mit Hilfe der beiliegenden Farbfotografien und/oder Diapositiven ist es möglich, die Charakteristik der Zähne eines Patienten zu bestimmen und, falls notwendig, auf dem Blankoschichtungsschema die bei Reproduktion zur Anwendung kommenden keramischen Massen oder Kunststoffverblendmassen bzw. Effektmassen zu notieren.

### 6. Computerprogramm (optional):

Aufgabe eines unterstützenden Computerprogramms kann sein:
- Darstellung der Situationsmodelle der Sortimente auf dem Bildschirm oder entsprechenden Anzeigeeinrichtungen
- Bilddarstellungen der Sortimente
- Darstellung der Schichtungsschemata der Sortimente
- Darstellung von Blankoschemata
- Darstellung der Schichtweise

Die möglichen Funktionen eines Computerprogramms können sein:
- Darstellung der oben genannten Parameter und deren Verknüpfung, so daß jedes Schichtungsschema mit jeder Form der Situationsmodelle kombinierbar wird.
- Veränderung des Farbaufbaus jedes Schichtungsschemas, d.h. die Farbnahme laut Blankoschichtungsschema wird in gespeichertes Schichtungsschema eingetragen. Das Ergebnis der farblichen Veränderung wird durch das Programm bearbeitet und in die entsprechende Bildvorlage übertragen und die Wirkung auf den farblichen Gesamteindruck erscheint am Bildschirm. Es besteht die Möglichkeit die Bilddarstellung farbig auszudrucken.
- Veränderung der Form und Stellung der Zähne
- Scannen von Behandlungsfällen von Fotografien oder Videoaufnahmen und Darstellung des vom Zahntechniker anzuwendenden Schichtungsschemas und der dazu benötigten Verblendmassen bzw. Effektmassen.

Das erfindungsgemäße System ermöglicht durch eine Vielzahl von Zahnformbeispielen und Farbstrukturbeispielen, die durch Schichtungsschemata und Bilddarstellungen, die das Vorgehen erläutern, und Bilddarstellungen vom Ergebnis dieser Schichtungsweise, leicht nachvollziehbar eine optimale Kommunikation zwischen Zahnarzt und Zahnlabor über den zu erstellenden Zahnersatz. Durch das Kombinieren der Zahnformen und Schichtungsschemata verschiedener Sets erhält der Zahnarzt und der Zahntechniker eine Vielzahl von Anwendungsmöglichkeiten, um einen patientengerechten, individuellen Zahnersatz zu erstellen.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor. Dabei zeigen:
- Figur 1:: schematisch ein Ausführungsbeispiel für den Aufbau des erfindungsgemäßen Systems;
- Figur 2:: schematisch die Schublade in vergrößerter Ansicht;
- Figur 3:: ein Beispiel für die Farbmerkmale natürlicher Zähne;
- Figuren 4a bis 4d:: Beispiel für die Schichtungsweise "Steg by Step", um die gewünschte Farbwirkung zu erzielen (Schichtungsschema) bezogen auf Figur 3;
- Figur 5:: schematisch die Schichtungsweise im Schnitt, bezogen auf Figuren 3 und 4a bis 4d;
- Figur 6:: Schematisch die Schichtungsstruktur eines oberen Eckzahns von palatinal.

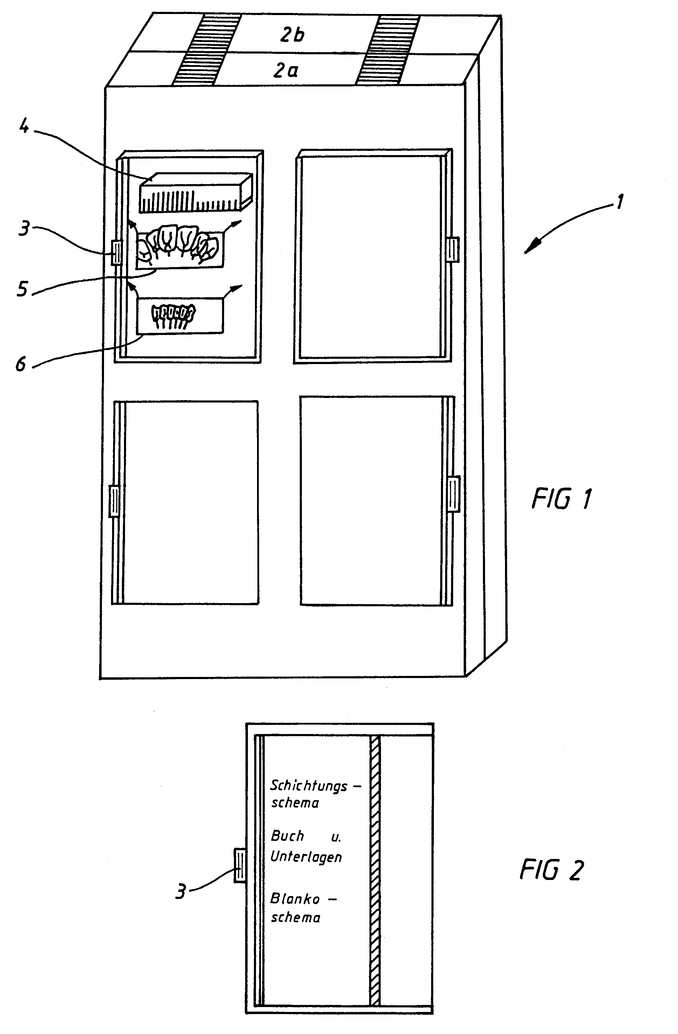

Die Figuren 1 und 2 zeigen im Beispiel, wie das System zur Form- und Farbbestimmung von Zähnen in der Praxis aufgebaut sein kann. Die Sortimente sind in einem trennbaren, stapelbaren Aufbewahrungskasten 1 untergebracht, der im Beispiel aus zwei Elementen 2a,2b besteht, aber auch mehr Elemente umfassen kann. Jedes Element 2 umfaßt z.B. vier Sets mit je einem Probantenbeispiel und Schubladen 3. In den Sets sind die Bilddarstellungen 4 (Diapositive) in einer herausnehmbaren Box enthalten, die Ober- und Unterkiefersituation 5, 6 auf einer herausnehmbaren Sockelplatte und ein Schubfach 3, in dem die jeweilige Dokumentation und das zugehörige Schichtungsschema enthalten ist.

Das Sortiment 1 kann aus zwei oder mehr Elementen 2 bestehen, so daß im Beispiel insgesamt acht untereinander kombinierbare Form- und Farbsituationen vorliegen und durch Kombination der Modelle und Schichtungsschemas mit Bildmaterial verschiedener Stets sind insgesamt 36 unterschiedliche Oberkiefersituationen und 36 unterschiedliche Unterkiefersituationen möglich.

Der Kasten 1 stellt z.B. das Grundsortiment dar, das durch weitere Elemente 2 , die ein oder mehrere Mastersortiment enthalten können, ergänzt werden kann. Die grundsätzliche Zahnfarbbestimmung erfolg auf herkömmliche Weise, .z. B. Farbcode der Fa. Ducera.

Die Zahnform- und Farbstrukturbestimmung, also die individuelle, farbliche und formliche Charakterisierung der Zähne, erfolgt anhand der Modelle und des Bildmaterials der einzelnen Sets. Dabei können z.B. folgende Grundmerkmale unterschieden werden: Zahnform, Zahnfarbe, Zahngrundkörper, Zahnhals, evtl. Mammelons, evtl. incisaler Saum (Saum an der Schneidekante), Schneidebereich.

Neben den grundsätzlich benutzten Keramikmassen: Opaquer, Opaquedentin, Dentin, Schneidemasse, kommen noch eine Vielzahl von Effektmassen zum Einsatz, die in allen natürlich vorkommenden Farbabstufungen erhältlich sind. Diese werden meist nach ihrer Farbwirkung bezeichnet z.B. Opal, Flamingo, Blau, Amber (z.B. aus Modifier- und Opalmassensortimente der Fa. Ducera Dental, Rosbach).

Die Farbbestimmung erfolgt i.d.R. durch den Zahnarzt mit Hilfe herkömmlicher Farbskalen. Anhand der in den Sets Nr. 1 bis Nr. 8 enthaltenen Situationsmodelle kann eine der ursprünglichen Zahnform des Patienten am nächsten kommende Zahnform ermittelt wird, z.B. die Zahnform aus Set Nr. 7.

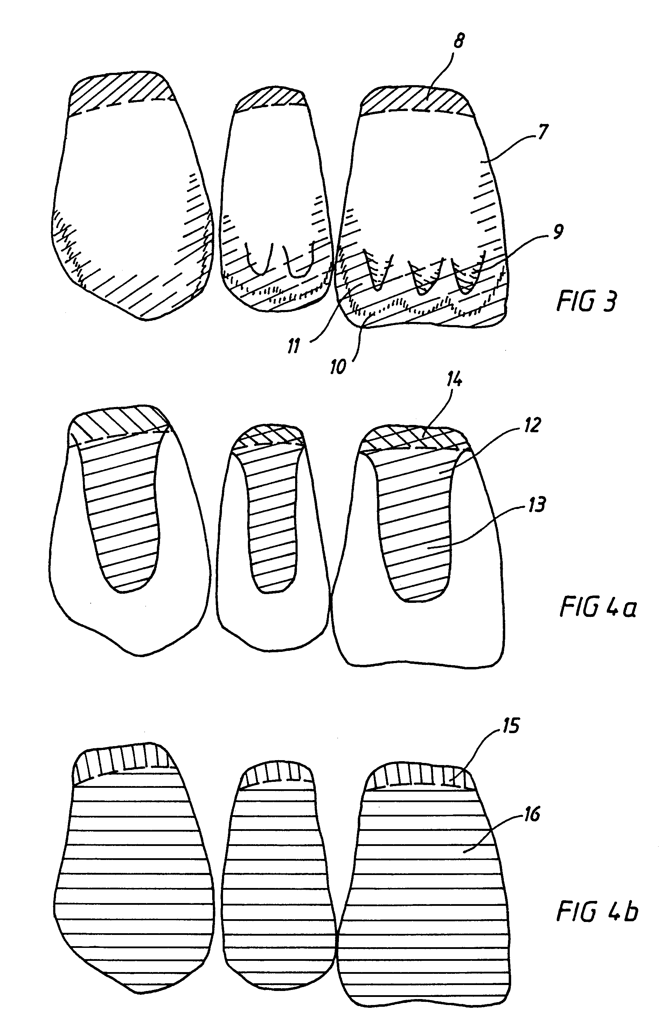

Die Bestimmung der individuellen Charakteristik (z. B. Mammelons, Sekundärdentin) erfolgt anhand des Bildmaterials des Zahnarztsortiments. Die Bestimmung der Farbwirkung der einzelnen Charakteristika erfolgt mit Einzelmassen-Farbskalen (z. B. der Modifiermassen) und werden laut Figur 3 im Blankoschematas notiert. Der dargestellte Schneidezahn des Patienten hat z.B. eine Farbstruktur nach Set Nr. 3, d.h. eine von der Farbe des Grundkörpers 7 abweichende Zahnhalsfarbe 8, einen incisalen Saum 10, drei Mammelons 9 und eine farbveränderte Schneide 11. Zu diesen einzelnen Merkmalen muß nun anhand der in Fotos oder Diapositiven dargestellten Farbschemata das entsprechende Farbschema ausgewählt werden. Z.B. Farbe des Grundkörpers: A3, Zahnhalsfarbe: Amber, Farbe des incisalen Saums: Blau-Opal, Farbe der Mammelons: Flamingo, Farbe der Schneide: S59.

Dieses Farbschema ist bereits in einem Beispiel des Sortiments enthalten (z.B. Set Nr. 3), ein Abweichen der Farbwirkung muß vom Zahnarzt selbst auf ein Blankoschichtungschema notiert werden (Figur 3).

Das beauftragte Zahnlabor bekommt die vom Zahnarzt zusammengestellten Daten in entsprechender Form: z.B. Patient 1234: Zahnfarbe A3, Zahnform: Set Nr. 7, Zahnfarbstruktur Set Nr. 3, Farbwerte: Set Nr. 5 (oder: falls kein passendes Farbschema gefunden: Farbe des Grundkörpers A3, Zahnhalsfarbe: Amber, incisaler Saum: Blau-Opal, Mammelons: Flamingo, Schneide: S59 laut Blankoschichtungsschema).

Aus dem Basis- bzw. Masterset holt sich der Zahntechniker die entsprechenden Situationsmodelle, Farbschemata, Schichtungsschemata und Bilddarstellungen und erhält somit eine exakte Vorlage zur Anfertigung des Zahnersatzes mit Arbeitsanleitung Schritt für Schritt.

Gemäß den Figuren 4a bis 4d wird nach dem Schichtungschema in einem 1. Schritt wird ein Metallkäppchen 12, das die Basis für den Zahnersatz bildet, von Opaquermasse 13: Farbe A3 umhüllt. Der Zahnhals 8 wird durch Intensivopaquer 14: Farbe rotbraun abgestuft (Figur 4a).

Der 2. Schritt besteht darin, den Zahn mit einer Dentinschicht 16 zu versehen und in seine erforderliche Form zu bringen. Dabei muß gemäß Schichtungsschema der Zahnhals 8 nochmals mit einer speziellen Effektmasse 15 farblich abgestuft werden (Figur 4b).

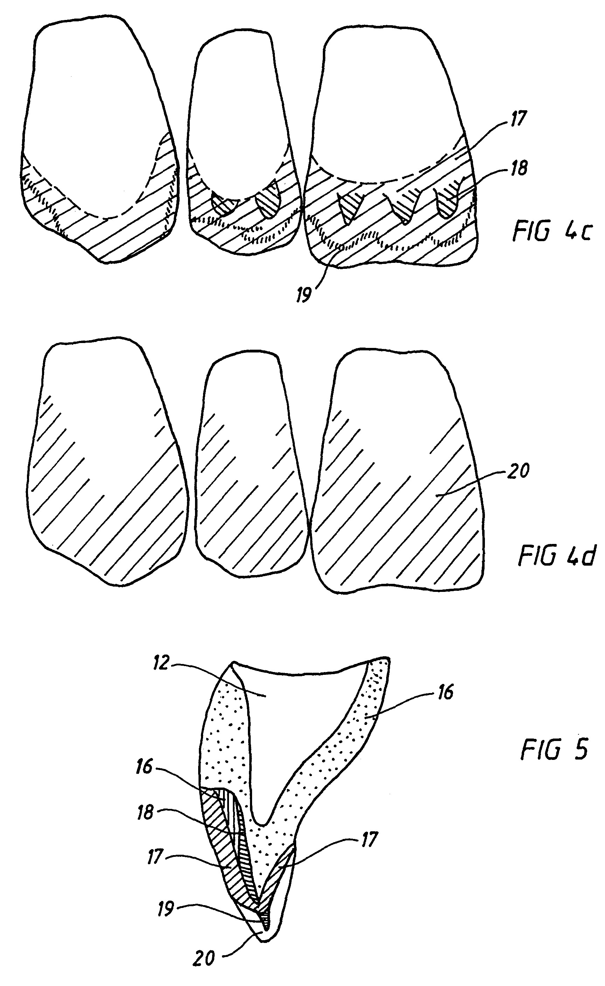

In einem 3. Schritt wird nun die Dentinschichtung 16 im Bereich der ermittelten Farbeinschlüsse, Mammelons 9 und im Bereich des incisalen Saums 10 reduziert. Die Mammelons 9 werden mittels einer Effektmasseschicht 18 in der erforderlichen Farbe geschichtet. In gleicher Weise wird im Bereich des incisalen Saums 10 eine passende Effektmasseschicht 19 aufgetragen. Das ganze wird im Bereich der Schneide mit Schneidemasse 17 überzogen (Figur 4c).

Im 4. Schritt wird der Bereich der Schneide 11 mit einer Deckschicht aus einer transparenten Masse 20 überzogen (Figur 4d).

Figur 5 zeigt nochmals die Schichtungsweise gemäß des Beispiels im Schnitt.

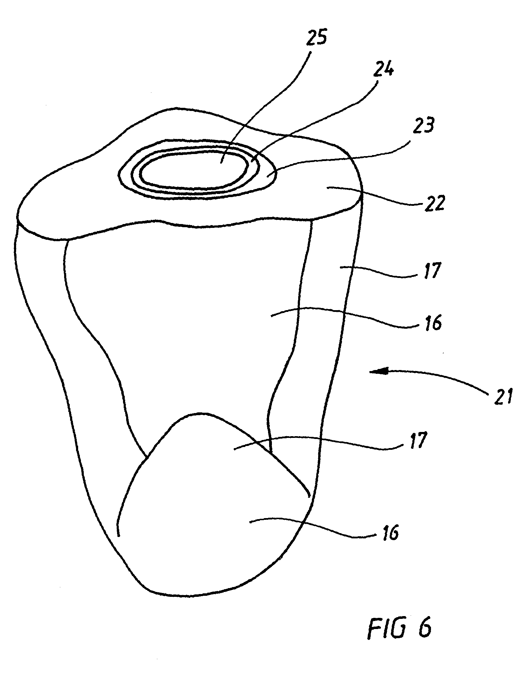

In Figur 6 ist ein Beispiel einer Schichtung eines Eckzahns von palatinal gezeigt. Der Zahngrundkörper 21 ist aus Dentinmasse 16 und Schneidemasse 17 geformt und im Bereich des incisalen Anteils ist Schneidemasse 22 aufgebracht. Etwa im Zentrum des Incisalbereichs ist ein Bereich mit Sekundärdentinmasse 25 ausgefüllt, welches eine gelblich-braune Färbung aufweist. Um den Bereich des Sekundärdentins sind zwei Schichtungen von Effektmassen 23,24 dargestellt, z.B. mit einem leicht weißlichen Anteil 24 und einem bläulichen Anteil 23.

## Patentansprüche

1. System zur Form- und Farbstrukturbestimmung von Zähnen, insbesondere für die Anwendung bei Vorbereitung und Herstellung von Zahnersatz, **dadurch gekennzeichnet, daß** es folgende Komponenten umfaßt:
- Situationsmodell(e) (5,6) des Ober- und/oder Unterkiefers eines Probanten;
- Farbbilddarstellungen (4) der Mundsituation eines Probanten
- den Farbbilddarstellungen zugeordnete Schichtungsschemata zur schrittweisen Darstellung und Anleitung für die notwendige Schichtungsfolge zur Anfertigung des Zahnersatzes.

2. System nach Anspruch 1, **dadurch gekennzeichnet, daß** es Farbbilddarstellungen der Schichtungsfolge gemäß den Schichtungsschemata umfaßt.

3. System nach Anspruch 1 oder 2, **dadurch gekennzeichnet, daß** es Blankoschemata zur individuellen Erfassung der Farbmerkmale umfaßt.

4. System nach einem der Ansprüche 1 bis 3, **dadurch gekennzeichnet, daß** es Reproduktionen von einzelnen, natürlichen Seitenzähnen zum Studium der Zahnform und Kauflächen umfaßt.

5. System nach einem der Ansprüche 1 bis 4, **dadurch gekennzeichnet, daß** es Silikonformen zur Reproduktion von Fertigkauflächen umfaßt.

6. System nach einem der Ansprüche 1 bis 5, **dadurch gekennzeichnet, daß** die Situationsmodelle Nachbildungen der natürlichen oder bereits teilweise durch Zahnersatz rekonstruierten Bezahnung des Probanten sind.

7. System nach einem der Anspüche 1 bis 6, **dadurch gekennzeichnet, daß** es Bilddarstellungen von gemäß den beiliegenden Schichtungsschemata rekonstruierten Zähnen enthält.

8. System nach einem der Ansprüche 1 bis 7, **dadurch gekennzeichnet, daß** die Darstellung und/oder Simulation der oben beschriebenen Komponenten mit Hilfe einer Computeranlage und eines entsprechenden Computerprogramms erfolgt.

## Claims

1. System for determining the form and colour structure of teeth, particularly for use in the preparation and production of artificial teeth. **characterized in that** it comprises the following components:
situation model(s) (5, 6) of the subject's upper and/or lower jaw;
colour pictures (4) of the subject's oral situation;
layering diagrams assigned to the colour pictures to serve as step-by-step illustration and guide for the layer sequence necessary for the fabrication of the artificial teeth.

2. System according to Claim 1, **characterized in that** it comprises colour pictures of the layer sequence according to the layering diagrams.

3. System according to Claim 1 or Claim 2, **characterized in that** it comprises blank diagrams for the individual recording of colour characteristics.

4. System according to any one of Claims 1 to 3, **characterized in that** it comprises reproductions of individual natural back teeth for study of tooth form and masticatory surfaces.

5. System according to any one of Claims 1 to 4, **characterized in that** it comprises silicon moulds for the reproduction of finished masticatory surfaces.

6. System according to any one of Claims 1 to 5, **characterized in that** the situation models are reproductions of the subject's natural dentition, or of the subject's dentition after it has already been partially reconstructed with artificial teeth.

7. System according to any one of Claims 1 to 6, **characterized in that** it includes pictures of teeth reconstructed in accordance with the accompanying layering diagrams.

8. System according to any one of Claims 1 to 7, **characterized in that** the display and/or simulation of the components described above is performed with the aid of a computer and an appropriate computer programme.

## Revendications

1. Système pour définir la forme et la structure de la couleur de dents, à appliquer en particulier lors de la préparation et de la fabrication d'une prothèse dentaire, **caractérisé en ce qu'**il comprend les éléments suivants :
- modèle(s) de situation (5, 6) de la mâchoire supérieure et/ou inférieure d'un sujet ;
- reproductions en couleurs (4) de la situation de la bouche d'un sujet ;
- schémas de stratification associés aux représentations en couleurs, en vue de la représentation et des instructions par étapes pour l'ordre de stratification nécessaire pour la fabrication de la prothèse dentaire.

2. Système selon la revendication 1, **caractérisé en ce qu'**il comprend des représentations en couleurs de l'ordre de stratification suivant les schémas de stratification.

3. Système selon la revendication 1 ou 2, **caractérisé en ce qu'**il comprend des schémas vierges pour l'enregistrement individuel des caractéristiques de couleurs.

4. Système selon l'une des revendications 1 à 3, **caractérisé en ce qu'**il comprend des reproductions de dents latérales naturelles individuelles pour l'étude de la forme des dents et des surfaces masticatrices.

5. Système selon l'une des revendications 1 à 4, **caractérisé en ce qu'**il comprend des moules en silicone pour reproduire les surfaces masticatrices finies.

6. Système selon l'une des revendications 1 à 5, **caractérisé en ce que** les modèles de situation sont des copies de la dentition, naturelle ou déjà partiellement reconstruite grâce à une prothèse dentaire, du sujet.

7. Système selon l'une des revendications 1 à 6, **caractérisé en ce qu'**il contient des reproductions de dents reconstruites suivant les schémas de stratification joints.

8. Système selon l'une des revendications 1 à 7, **caractérisé en ce que** la représentation et/ou la simulation des éléments décrits plus haut se font à l'aide d'une installation informatique et d'un programme informatique adéquat.
